Europäisches Patentamt

European Patent Office

Office européen des brevets

(11) Publication number: **0 492 358 A1**

# EUROPEAN PATENT APPLICATION

(21) Application number: **91121579.6**

(22) Date of filing: **17.12.91**

(51) Int. Cl.5: **G06K 7/06, G06K 7/08**

(30) Priority: **21.12.90 US 633249**

(43) Date of publication of application:
**01.07.92 Bulletin 92/27**

(84) Designated Contracting States:
**DE ES FR GB IT NL SE**

(71) Applicant: **TANDEM COMPUTERS INCORPORATED**
**10435 N. Tantau Avenue**
**Cupertino, California 95014-0709(US)**

(72) Inventor: **Sherman, Benjamin**
**2146 Seacliff Drive**
**Milpitas, CA 95035(US)**

(74) Representative: **Liesegang, Roland, Dr.-Ing. et al**
**FORRESTER & BOEHMERT**
**Franz-Joseph-Strasse 38**
**W-8000 München 40(DE)**

(54) Electronic terminal and method for encoding magnetic strip and IC data cards.

(57) A system and method for simultaneously performing read/write functions in different storage media on a data storage card (3) that includes both magnetic strip and IC data storage media (7) retains the data storage card (3) in fixed position as a magnetic read/write head (41) is moved along the magnetic strip (7) by a motorized lead screw (33) and as a contact head (21) simultaneously connects to the IC data storage medium.

Figure 1

EP 0 492 358 A1

Rank Xerox (UK) Business Services

## FIELD OF THE INVENTION

This invention relates to electronic data encoding and more particularly to a device capable of storing and retrieving information from a data card containing either a magnetic strip memory or an embedded integrated circuit (IC) memory.

## BACKGROUND OF THE INVENTION

Plastic data cards containing magnetic data storage strips are well known and have found significant commercial use in the banking, industrial security, and document control industries. Within the banking industry, such cards often are encoded with account information including the owner's name, institution identification number, and account number. The card owner is able to utilize such card in a remote teller machine to conduct general banking business such as transferring funds, making balance inquiries and withdrawing cash.

Digital data is stored on a magnetic strip on one surface of such card as a series of bits of coded information arranged along the length of the strip. The data is commonly read or written by moving the length of the magnetic strip on the card over a transducer (read/write head). Conventional card reading machines include a card conveying path along which one or more stationary magnetic read and write heads are fixed. The card is commonly transported along the path with rollers or a conveyor belt such that the magnetic strip magnetically couples to the fixed heads, enabling the transfer of data bits between the strip and the fixed heads. Systems of this type are disclosed in the literature (see, for example, U.S. Patent No. 4,937,438 and U.S. Patent No. 4,861,974). One disadvantage of moving the card relative to the fixed head is that the minimum path length for the card reader is at least twice the length of the card.

An alternative to the card that stores data in a magnetic strip is the "IC" or "smart card" that stores data in an embedded monolithic integrated circuit (IC). One advantage of using an IC as the storage device is that much more information can be stored within the IC than can be stored on a conventional magnetic strip. Also, the conventional magnetic strip has a relatively large surface area that suffers from exposure, wear and tear as the card degrades with use and abuse over time. Stored data within the integrated circuit, however, is relatively protected and isolated and only the electrical contacts on the card are exposed to the environment.

A variety of dedicated smart card readers have been developed. U.S. Patent No. 4,871,905 by Meta et al. discloses a smart card reader/writer showing a conveyor belt which transports the card into a position in which an electrical connection is made between the machine and external contacts for the IC in the card. U.S. Patent No. 4,724,310 by Shimamura et al. discloses a reader/writer for a smart card having a longitudinal carriage for moving the card into a casing. A block having contact pins is snugly embraced by the carriage and is adapted for establishing an electrical connection with the external contacts for the IC in the IC card after the card is moved into position within the machine.

Although the IC card may eventually replace the magnetic strip card, a large installed base of magnetic strip cards will likely make such transition slow and expensive. Furthermore, magnetic strip cards have advantages which favor their continued use even in view of the superior storage density of the smart card. For example, the magnetic strip card is less vulnerable than the smart card to electrostatic discharge (ESD). Placing the magnetic strip card into a woolen pocket on a dry day will not create sufficient static electricity to destroy data stored in the magnetic strip, but might create sufficient static electricity to destroy data stored in the IC on a smart card. Since the information in a magnetic strip card is spread over a much larger surface area, the likelihood of completely damaging magnetically stored data through ESD is much more remote. The magnetic strip, however, is more vulnerable to damage due to magnetic fields, heat and mechanical abrasion. Certain applications may therefore justify using both storage media on the same card in such a way that both storage media are simultaneously addressable. Redundant data, for instance, stored on each of the two media can be used to verify the integrity of the stored data.

Apparatus for reading both magnetic strip cards and smart cards are known in which a magnetic read head is disposed along a path of movement for cards, and an electronic connector is disposed at the end of the path for interfacing with the IC in the same or similar smart card. Apparatus of this type is described in the literature (see, for example, U.S. Patents 4,612,436 and 4,833,310).

## SUMMARY OF THE INVENTION

In accordance with the system and method of the present invention, the data read and write functions can be performed simultaneously on both the magnetic strip and the IC data storage media of a data card. The data card is inserted into the terminal of the present invention through a card recess where it is fixed in position and locked into place by a latch. A magnetic head is mounted on a shuttle that traverses the length of the magnetic strip to read the data stored on the magnetic strip. Simultaneously, a connector contacts IC card contacts to read the contents of the IC mounted in the same data card. The moving magnetic head eliminates the conventional double-length path of movement and reduces the overall size of the terminal. In addition, the moving head permits simultaneous interactive access to both of the IC and magnetic strip storage media.

## DESCRIPTION OF THE DRAWINGS

Figure 1 is a block diagram of the card-reading terminal according to the present invention;

Figure 2 is a front perspective view of one embodiment of the card-reading terminal according to the present invention;

Figure 3 is a right side view of the terminal according to Figure 2;

Figure 4 is a front exploded view of the terminal of Figure 2 showing the smart card and magnetic card reader mechanisms of the present invention;

Figures 5(a) and 5(b) are front and right side views, respectively, of the smart card reader according to the present invention;

Figure 6 is a bottom sectional view of the terminal of Figure 2 showing the assembled smart card and magnetic card reader according to the present invention; and

Figure 7 is a front assembly drawing of the terminal of Figure 2.

## DESCRIPTION OF THE PREFERRED EMBODIMENT

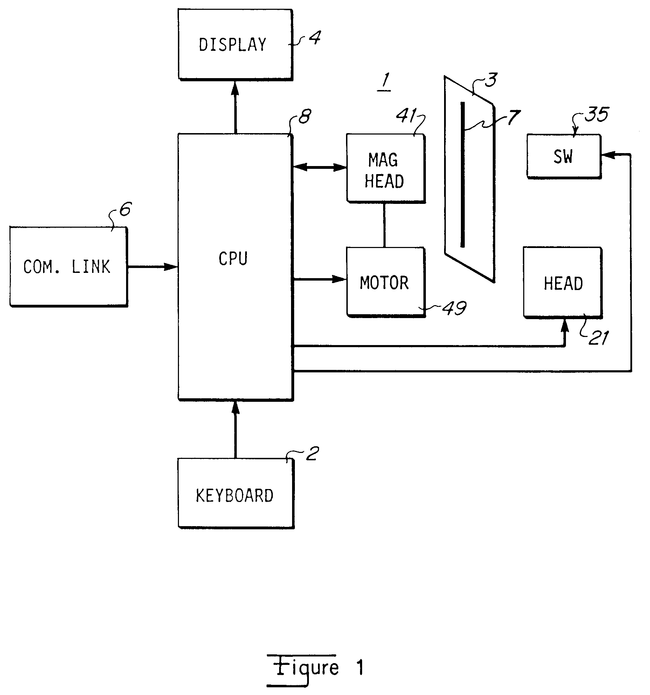

Referring now to FIG. 1, a schematic of the preferred embodiment of terminal 1 is shown along with the conventional data card 3, in position for utilization by the terminal 1. Data card 3 is fixed into place between the magnetic head 41 and the head 21. The presence of the data card 3 is detected by a switch 35, which signals the CPU 8 to initiate a data transfer sequence. The CPU 8 prompts the user via display 4 to enter required transaction data on keyboard 2. Communications with remote sites may be conducted along a communication link 6. Data transfer between the data card 3 and the CPU 8 begins with a signal to motor 49 to move magnetic head 41 along the magnetic strip 7. Simultaneously, the CPU 8 transfers data to and from the IC 5 by way of head 21, permitting interactive utilization between data stored on the magnetic strip and the IC 5. Although the terminal 1 is capable of operating on data cards 3 having both magnetic strip 7 and IC 5 storage media, it should be understood that the terminal 1 is also operable on a data card having only one of the two types of storage media.

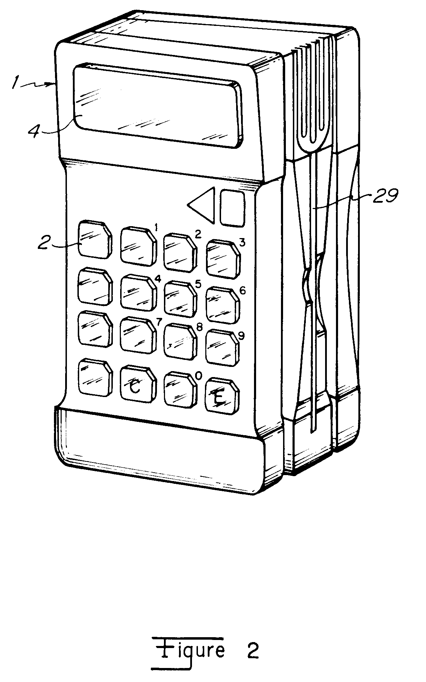

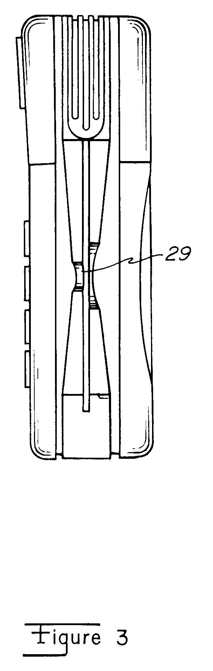

Referring now to FIG. 2, one embodiment of the terminal 1 is shown in front perspective view. The front panel of terminal 1 includes a display 4 and a keypad 2. The right side of the terminal 1 contains a card recess 29 which extends vertically substantially from the top to the bottom of the terminal side. FIG. 3 shows the card recess 29 on the right side view of terminal 1.

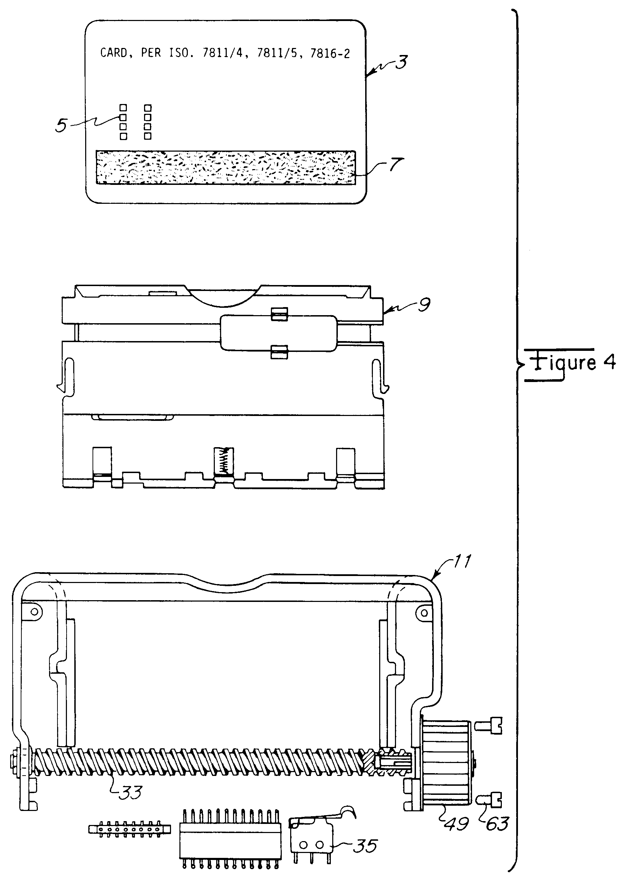

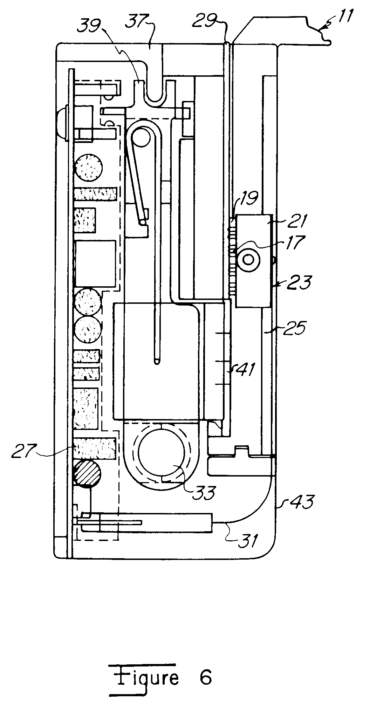

In operation, the terminal 1 is activated by inserting the data card 3 into the card recess 29, as shown in the front assembly drawing of FIG. 4. When the data card 3 is fully inserted into card recess 29, switch 35, illustrated in FIG. 6, is depressed by the edge of the data card 3 to signal the start of an operating sequence. The sequence may include the entry of an identification number via keypad 2, and the display of instructions or other information on display 4. Magnetic head 41 scans across the length of the magnetic strip 7 and, as the head 41 moves from its initial position, latch 77 pivots over the external opening of card recess 29 to prevent the removal of the card until the magnetic head 41 has completed its scan. Securing the card in static position and moving the magnetic head 41 over the length of the stationary magnetic strip 7 permits simultaneous access to both the magnetic strip 7 and the IC 5. Also, moving the magnetic head 41 and fixing the position of the data card 3 eliminates the double-length card path in conventional terminals and greatly reduces the overall size requirement, weight, and cost of the terminal 1.

Insertion of data card 3 into card recess 29 aligns the connections for IC 5 with contact window 19. This alignment allows the connectors 17 on the head 21 to make contact with the IC 5 contacts 19. Mechanical tension is maintained between the head 21 and the IC 5 contacts by spring support 25 and springs 65 which hold the head 21 in place. Once contact between the IC 5 and head 21 is established, data can be transferred between the IC 5 and CPU 8 along a flexible interconnect 31. Although insertion of the data card 3 into card recess 29 is the preferred scheme of aligning the data card with the contact window 19, an alternate embodiment of the terminal includes a hinged structure in which upper and lower sections of the terminal are opened and the data card 1 is fixed in an alignment recess for subsequent data exchange with the CPU 8 in the manner as previously described.

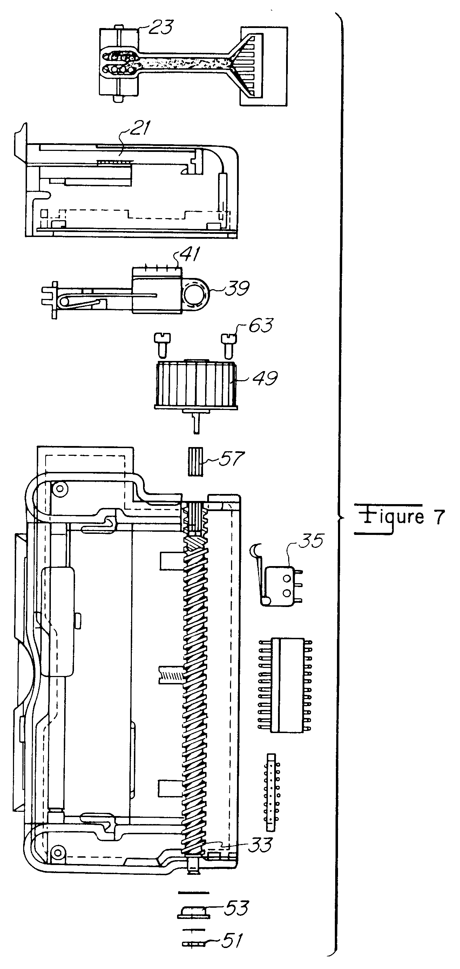

Thus, terminal 1 is capable of simultaneously accessing both the magnetic strip 7 and IC 5, thereby allowing the two storage media to operate interactively with each other where desired. The simultaneous operations can more easily be understood by referring to FIG. 7. A three track magnetic head 41 is mounted on head shuttle 39 which is mounted and supported on lead screw 33 and shaft 37. Threads on the head shuttle 39 mate with the threads of the lead screw 33 and, as the lead screw 33 is rotated, the head shuttle 39 moves along the shaft 37. The lead screw 33 is held in place by sleeve-bearing 53 and retaining ring 51. Stepper motor 49 drives the lead screw 33 through lower pulley 57. Thus, as the shuttle and head move along the shaft 37, the magnetic head 41 is positioned to read and write data on magnetic strip 7 on the data card 3.

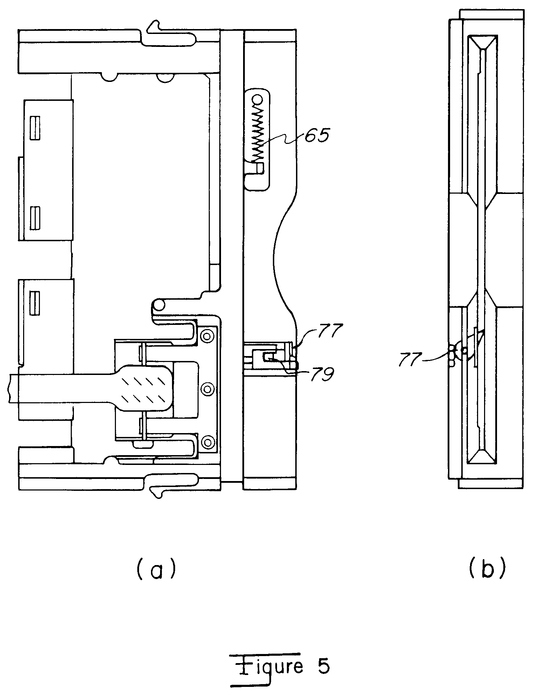

In accordance with the present invention, a data card is locked in the card recess 29 during a data read or write operation. This locking prevents the user from removing the card during a write cycle that might thereby damage both the old data being rewritten and the new data being stored. Referring now to FIGS. 5(a) and 5(b), a preferred embodiment of a latch 77 is shown in its unlatched position for locking the data in the card recess 29. The latch 77 is mechanically coupled to a spring 65 such that when a data card 3 is inserted into card recess 29, tension from the spring 65 causes the latch 77 to rotate clockwise by approximately ninety degrees. The latch 77 is reset by the contact of release 81 (shown in FIG. 7) mounted to head shuttle 39. As the head shuttle 39 returns to its starting point after transferring data, the release 81 pushes protrusion 79 on the latch 77 causing the latch 77 to rotate counter-clockwise by ninety degrees to its unlatched position.

Figure 4 shows an exploded view of the smart card reader 9 and magnetic card reader 11 according to the present invention. The modular design of the terminal permits the interchange of various modular components to accommodate the various smart card standards adopted by the U.S., Europe and Japan. These various standards establish different relative locations of the IC connections and magnetic strip on the data cards. In addition, several different IC 5 contact configurations presently exist, and additional configurations will likely be adopted as the smart cards gain wider acceptance. Head 23 may therefore be formed in a variety of configurations and may be positioned differently within different modules that can be assembled within the terminal of the present invention to accommodate the different configurations of data cards under various smart card standards.

## Claims

1. A terminal for transferring data signals to or from a data storage card (3) having an elongated magnetic strip (7) or integrated circuit (5) for storing data, **characterized** by a housing including a recess (29) therein for receiving and containing a data storage card (3) in substantially fixed position therein; and by contacts (19) positioned near the recess (29) for connecting to an integrated circuit (5) on a data storage card (3) to transfer data signals thereto or therefrom; and by a magnetic transducer (41) movably positioned near the recess for interacting with a magnetic strip (7) on the data storage card (3) over substantially the length thereof on the data storage card (3) for transferring data signals thereto or therefrom.

2. The terminal according to claim 1, **characterized** in that the magnetic transducer includes a magnetic head (41) for reading and writing data signals on the magnetic strip (7) of a data storage card (3); and in that the magnetic head (41) is moved substantially along the length of the magnetic strip (7) on a data storage card (3).

3. The terminal according to claim 1 or 2, **characterized** in that the contacts (19) and the magnetic transducer are disposed near the recess (29) within the housing to connect to the integrated circuit (5) and interact with the magnetic strip (7) on a data storage card (3) substantially simultaneously.

4. The terminal according to claim 2 or 3, **characterized** by a lead screw (33) disposed within the housing substantially parallel to the magnetic strip (7) on a data storage card (3) positioned within the recess (29); by a shaft (37) mounted within the housing substantially parallel to the lead screw (33); by a head shuttle (39) having threads therein mating with threads on the lead screw (33) and supporting the magnetic head (41) and positioned to be supported on the lead screw (33) and shaft (37) for movement therealong; and by a motor (49) within the housing disposed for turning the lead screw (33) to move the magnetic head (41) substantially along the length of the magnetic strip (7) on a data storage card (3) positioned within the recess (29).

5. The terminal according to one of the preceding claims, **characterized** by a lock (77) for mechanically locking the data storage card (3) into the recess (29) during interaction of the magnetic transducer with the magnetic strip (7) on a data storage card (3) positioned within the recess (29).

6. The terminal according to claim 5, **characterized** in that the lock for mechanically locking the data storage card (3) into the recess (29) includes a pivoting latch (72) mounted adjacent to the recess (29), for operation in a first position which permits insertion or removal of the data storage card (3) from the recess (29), and for operation in a second position which inhibits removal of the data storage card (3) from the recess (29) following insertion therein of a data storage card (3) and while the magnetic transducer is interacting with the magnetic strip (7) on the data storage card (3) positioned in the recess (29).

7. The terminal according to claim 6, **characterized** in that the lock includes a spring (65) coupled to the latch (77) for pivoting the latch (77) from the first to the second position when a data storage card (3) is inserted into the recess (29); and in that a release mechanism (81) is coupled to the latch (77) and to the magnetic transducer and is reset from the second to the first position in response to the magnetic transducer concluding interaction with the magnetic strip (7) on a data storage card (3) positioned within the recess (29) to permit removal of the data storage card (3) therefrom.

8. The terminal according to one of the preceding claims, **characterized** in that a detector (35) detects the insertion of a data storage card (3) into the recess (29).

9. The terminal according to claim 8, **characterized** in that the detector includes a switch (35) mounted for activation by a data storage card (3) positioned within the recess (29).

10. The terminal according to one of the preceding claims, **characterized** in that the length of the recess (29) is substantially equal to the length of the data storage card (3).

11. The terminal according to one of the preceding claims, **characterized** in that the contacts (19) are formed in a contact head (21) which is mounted for making contact with integrated circuit connections on the data storage card (3) positioned within the recess (29), in that; a lever (25) supports the contact head (21) in positioned to make contact with the integrated circuit connections; and in that a spring (65) is disposed with respect to the lever (25) for resiliently biasing the contact head (21) in a direction toward a data storage card (3) positioned within the recess (29).

12. A method for transferring data signals to or from an elongated magnetic strip (7) or integrated circuit (5) on a data storage card (3) using a magnetic transducer (41) or contacts (19) for the integrated circuit (5), **characterized** in that a data storage card (3) is positioned in contact with the contacts (19) for the integrated circuit (5) and adjacent to the magnetic transducer (41); and in that the magnetic transducer (41) is moved substantially the length of the magnetic strip (7) for transferring data signals thereto or therefrom.

13. The method according to claim 12, **characterized** in that, to preserve the integrity of data transferred to or from the data storage card (3), the data storage card (3) is secured in position to prevent removal from its position adjacent to the magnetic transducer (41) until the step of moving the magnetic transducer (41) is completed.

14. The method according to claim 12 or 13, **characterized** in that the presence of a data storage card (3) in selection position is detected; and in that the magnetic transducer (41) is activated prior to the transferring of data signals to or from the magnetic strip (7) on the data storage card (3).

15. The method according to one of the preceding claims 12 to 14, **characterized** in that contact with the integrated circuit (5) of a data storage card (3) occurs substantially simultaneously with movement of the magnetic transducer (41) along the magnetic strip (7) of the data storage card (3).

Figure 1

Figure 2

Figure 3

CARD, PER ISO. 7811/4, 7811/5, 7816-2

*3*

*5*

*7*

*9*

*11*

*33*

*49* *63*

*35*

Figure 4

(a)

(b)

Figure 5

Figure 6

Figure 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-C-3 921 647 (SIEMENS AG) <br><br> * the whole document * | 1-2, 11-13 | G06K7/06 <br> G06K7/08 |
| Y | | 4-5, 8-10, 14-15 | |
| Y | DE-A-3 314 277 (DICOM ELECTRONICS) <br><br><br> * abstract; claims 1-16; figures 1-5 * | 4-5, 8-10, 14-15 | |
| A | * page 5, line 1 - page 8, line 4 * | 1-2 | |
| A | PATENT ABSTRACTS OF JAPAN <br> vol. 10, no. 12 (P-421)(2069) 17 January 1986 <br> & JP-60 167 065 ( TOUKIYOU TATSUNO K.K. ) 30 August 1985 <br> * abstract * | 1,5-6,13 | |
| A | FR-A-2 603 405 (KABUSHIKI KAISHA TOSHIBA) <br> * page 5, line 5 - page 7, line 20; claims 1-2 * | 1,12 | **TECHNICAL FIELDS SEARCHED (Int. Cl.5 )** <br><br> G06K |

The present search report has been drawn up for all claims

| Place of search | Date of completion of the search | Examiner |
|---|---|---|
| THE HAGUE | 20 MARCH 1992 | BEAUCE G.Y.G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)